# EUROPEAN PATENT SPECIFICATION

(11) **EP 4 376 149 B1**
(45) Date of publication and mention of the grant of the patent: **04.11.2026**
(21) Application number: 23820150.3
(22) Date of filing: 09.06.2023
(51) Int. Cl.: H01M 10/0562, H01M 10/052, C01B 25/14, C01D 15/00, C01G 9/00, C01G 11/00, C01G 13/00

(54) **SULFIDE-BASED SOLID ELECTROLYTE, METHOD FOR PREPARING SULFIDE-BASED SOLID ELECTROLYTE, AND ALL-SOLID BATTERY COMPRISING SULFIDE-BASED SOLID ELECTROLYTE**
FESTELEKTROLYT AUF SULFIDBASIS, VERFAHREN ZUR HERSTELLUNG EINES FESTELEKTROLYTS AUF SULFIDBASIS UND FESTSTOFFBATTERIE MIT FESTELEKTROLYT AUF SULFIDBASIS
ÉLECTROLYTE SOLIDE À BASE DE SULFURE, PROCÉDÉ POUR LA PRÉPARATION D'UN ÉLECTROLYTE SOLIDE À BASE DE SULFURE, ET BATTERIE TOUT SOLIDE COMPRENANT UN ÉLECTROLYTE SOLIDE À BASE DE SULFURE

(30) Priority: 10.06.2022 JP 2022094403
(43) Date of publication of application: 29.05.2024
(73) Proprietor: LG ENERGY SOLUTION, LTD., Seoul 07335 (KR)
(72) Inventor: NARIMATSU, Eiichiro, Yokohama-shi, Kanagawa 220--0011 (JP); IKENOMOTO, Shun, Yokohama-shi, Kanagawa 220--0011 (JP); MATSUBARA, Keiko, Yokohama-shi, Kanagawa 220--0011 (JP)
(74) Representative: Goddar, Heinz J.
(86) International application number: PCT/KR2023/007979
(87) International publication number: WO 2023/239215

(56) References cited:
- KR-A- 20200 129 330
- KR-A- 20210 054 817
- KR-A- 20210 098 246
- KR-A- 20210 101 061
- US-A1- 2018 351 148
- US-A1- 2021 135 278
- CHEN TING ET AL: "Argyrodite Solid Electrolyte with a Stable Interface and Superior Dendrite Suppression Capability Realized by ZnO Co-Doping", vol. 11, no. 43, 30 October 2019 (2019-10-30), US, pages 40808 - 40816, XP055807493, ISSN: 1944-8244, Retrieved from the Internet <URL:https://pubs.acs.org/doi/pdf/10.1021/acsami.9b13313> DOI: 10.1021/acsami.9b13313
- KAVISH ET AL: "Correlation of Structure and Fast Ion Conductivity in the Solid Solution Series Li1+2xZn1-xPS4 | Chemistry of Materials", vol. 30, no. 3, 13 February 2018 (2018-02-13), US, pages 592 - 596, XP093246144, ISSN: 0897-4756, Retrieved from the Internet <URL:https://pubs.acs.org/doi/10.1021/acs.chemmater.7b05108> DOI: 10.1021/acs.chemmater.7b05108

## Description

### TECHNICAL FIELD

The present disclosure relates to a sulfide-based solid electrolyte, a method for preparing a sulfide-based solid electrolyte, and a solid-state battery including a sulfide-based solid electrolyte.

### BACKGROUND ART

Development of solid-state batteries using a solid electrolyte substituting for a liquid electrolyte of lithium-ion batteries has been conducted in order to provide batteries with high safety, long service life and high energy density. Among many types of solid electrolytes, a sulfide-based solid electrolyte, such as Li₁₀GeP₂S₁₂, has high ion conductivity close to the ion conductivity of a liquid electrolyte and is soft, and thus is advantageous in that it is easy to obtain close adhesive property to an active material. Therefore, commercialization of solid-state batteries using a sulfide-based solid electrolyte has been expected.

Since lithium metal can increase energy density per weight (Wh/kg) by virtue of its low weight per unit volume and high theoretical capacity, it has been given many attentions as a negative electrode material of a solid-state battery. However, a sulfide-based solid electrolyte, such as Li₁₀GeP₂S₁₂, has low stability to lithium metal, and thus is problematic in that it has a difficulty in using together with a lithium metal negative electrode.

To solve the problem, Patent Documents 1-3 disclose a sulfide-based solid electrolyte which has an argyrodite-type crystal structure represented by the chemical formula of Li_{7-x-2y}PS_{6-x-y}Clₓ and is resistant against lithium metal. Patent Document 4 discloses a sulfide-based solid electrolyte having improved stability to lithium metal by precisely controlling the composition of a sulfide-based solid electrolyte having a crystal structure represented by Li₁₀GeP₂S₁₂.

US 2021/135 278 A1 relates to a solid electrolyte including a compound having an argyrodite crystal structure represented by the following formula:
LiₐMₓPS_{b}Br_{c}X_{d}. wherein M is selected from Na, K, Fe, Mg, Ca, Ag, Cu, Zr, Zn, or a combination thereof; X is Cl, I, or a combination thereof; and 0 ≤ x < 1, 5 ≤ (a+x) < 7, 5 ≤ a ≤ 6, 4 ≤ b ≤ 6, 0<(c+d) ≤ 2, and (c/d)>4.

However, according to the related art, there is a problem in that the sulfide-based solid electrolytes have low ion conductivity.

### [References]

### [Patent Documents]

Patent Document 1: Japanese Patent Publication No. 5873533
Patent Document 2: Japanese Patent Laid-Open No. 2018-45997
Patent Document 3: Japanese Patent Laid-Open No. 2018-203569
Patent Document 4: Japanese Patent Laid-Open No. 2016-27545

### DISCLOSURE

### Technical Problem

The present disclosure is designed to solve the problems of the related art, and therefore the present disclosure is directed to providing a sulfide-based solid electrolyte having improved ion conductivity, a method for preparing a sulfide-based solid electrolyte, and a solid-state battery including a sulfide-based solid electrolyte.

### Technical Solution

In one aspect of the present invention, there is provided a sulfide-based solid electrolyte, which contains a Group 12 element, has an argyrodite-type crystal structure, and is represented by the chemical formula of Li_{7-x-2y}M_{y}PS₆₋ₓHaₓ, wherein M is Zn, Ha is at least one element selected from halogen elements and Ha comprises Br, and x and y satisfy the conditions of 1.0 < x < 2.5 and 0 < y < 0.075.

According to an embodiment, x may satisfy the condition of 1.3 ≤ x ≤ 2.0.

According to another embodiment, x may satisfy the condition of 1.3 ≤ x ≤ 1.8

In another aspect of the present invention there is provided a method for preparing the sulfide-based solid electrolyte as defined in any one of the above-described embodiments, including the steps of:
mixing a lithium source, a Zn source, a phosphorus source, a sulfur source and a halogen source comprising Br to obtain a mixture; and
firing the mixture at a temperature of 250-600°C.

In still another aspect of the present invention there is provided a solid-state battery including a positive electrode, a negative electrode and a solid electrolyte membrane, wherein the solid electrolyte membrane includes the sulfide-based solid electrolyte as defined in any one of the above-described embodiments.

### Advantageous Effects

The present invention can provide a sulfide-based solid electrolyte having improved ion conductivity, a method for preparing a sulfide-based solid electrolyte, and a solid-state battery including a sulfide-based solid electrolyte.

### DESCRIPTION OF DRAWINGS

FIG. 1 shows the X-ray diffractometry (XRD) pattern of each of (Reference) Examples 1-4.
FIG. 2 shows the XRD pattern of each of Reference Examples 5 and 6 and Comparative examples 1 and 2.
FIG. 3 is a graph illustrating the lithium-ion conductivity depending on the composition of a sulfide-based solid electrolyte.

### BEST MODE

Hereinafter, preferred embodiments of the present disclosure will be described in detail.

### [Solid Electrolyte for Solid-state battery]

The solid electrolyte for a solid-state battery according to the present disclosure is a sulfide-based solid electrolyte. The solid electrolyte for a solid-state battery may be incorporated to a positive electrode mixture and used as an ingredient of a positive electrode, may be incorporated to a negative electrode mixture and used as an ingredient of a negative electrode, or may be used as a separator. The solid electrolyte for a solid-state battery may further include additives, such as a lithium salt, a conductive material, a binder resin, or the like, depending on the particular use.

### <Sulfide-Based Solid Electrolyte>

The sulfide-based solid electrolyte may have a crystal structure. The sulfide-based solid electrolyte having a crystal structure accelerates lithium-ion conduction to provide high lithium-ion conductivity.

The sulfide-based solid electrolyte may have an argyrodite-type, NASICON type, perovskite type, garnet type or LiGePS type crystal structure. The sulfide-based solid electrolyte of the present invention has an argyrodite-type crystal structure. The sulfide-based solid electrolyte having an argyrodite-type crystal structure has high stability to lithium metal, and thus lithium metal having high energy density per weight may be used as a negative electrode material.

The sulfide-based solid electrolyte may be amorphous, vitreous or glass-ceramic.

The sulfide-based solid electrolyte may have ion conductivity of metal that belongs to Group 1 or Group 2 in the Periodic Table, and may include Li-P-S type glass or Li-P-S type glass-ceramic.

The sulfide-based solid electrolyte may include a crystalline phase and an amorphous phase. The sulfide-based solid electrolyte may include a crystalline phase containing an argyrodite-type crystal structure (also referred to as 'argyrodite phase' hereinafter) and the other phase (also referred to as 'impurity phase' or 'unknown phase' hereinafter). Preferably, the argyrodite-type crystal structure is a cubic system. The other phases may be crystalline phases or amorphous phases. The other phases may include Li₂S phase, P₂S₅ phase, LiCl phase, LiBr phase, Li₃PS₄ phase, MgS phase, CaS phase, SrS phase, BaS phase, ZnS phase, or the like, regardless of a crystalline phase or an amorphous phase.

The sulfide-based solid electrolyte of the present invention does not include or substantially does not include any impurity phase other than argyrodite phase. In other words, the sulfide-based solid electrolyte preferably includes argyrodite phase alone. When the sulfide-based solid electrolyte does not include or substantially does not include any impurity phase, lithium-ion conduction is hardly inhibited, and thus the sulfide-based solid electrolyte may have high lithium-ion conductivity.

The ratio of crystalline phase contained in the sulfide-based solid electrolyte may be evaluated quantitatively or semi-quantitatively from the X-ray diffractometry (XRD) pattern. According to an embodiment, the ratio of crystalline phase may be evaluated by comparing the peak intensity (height or area) of the XRD pattern.

The sulfide-based solid electrolyte according to the present invention is represented by the chemical formula of Li_{7-x-2y}M_{y}PS₆₋ₓHaₓ, wherein M is Zn, Ha is at least one element selected from halogen elements and Ha comprises Br, and x and y satisfy the conditions of 1.0 < x < 2.5 and 0 < y < 0.075. Such a sulfide-based solid electrolyte may have high lithium-ion conductivity.

In the sulfide-based solid electrolyte, lithium in Li₇₋ₓPS₆₋ₓHaₓ is partially substituted with a Group 12 element (M) capable of being converted into a divalent cation. The Group 12 element (M) substituting for lithium is Zn. Lithium (Li) has an ion radius (hexa-coordinated) of 76 pm, and zinc (Zn), cadmium (Cd) and mercury (Hg) have an ion radius (hexa-coordinated) of 74 pm, 95 pm and 102 pm, respectively. Based on the valence number of element, two lithium elements may be substituted with one Group 12 element (M). A lithium site vacancy is generated through the substitution with a Group 12 element (M) to provide improved lithium-ion conductivity. In addition, the sulfide-based solid electrolyte undergoes a change in lattice constant and lattice volume through the substitution with a Group 12 element (M), and thus may have a crystal structure suitable for lithium-ion conduction.

The Group 12 element is zinc (Zn). When the Group 12 element is zinc (Zn), the sulfide-based solid electrolyte may have high crystallinity, and thus may have high ion conductivity. It is thought that this is because the ion radius (76 pm) of lithium (Li) is close to the ion radius (74 pm) of zinc (Zn), and the argyrodite-type crystal structure may be retained with ease even after the substitution with Zn.

The doping amount (y) of a Group 12 element (M) in the chemical formula of Li_{7-x-2y}M_{y}PS₆₋ₓHaₓ satisfies the condition of 0 < y < 0.075, and even more preferably 0.0125 ≤ y ≤ 0.05. When y satisfies the above-defined range, the sulfide-based solid electrolyte may have high ion conductivity. When y is 0, it is not possible to obtain a change in crystal structure derived from the substitution with a Group 12 element (M), resulting in low ion conductivity. When y is 0.45 or more, the sulfide-based solid electrolyte cannot retain the argyrodite-type crystal structure, and the impurity phase inhibiting lithium-ion conduction is increased in the sulfide-based solid electrolyte, resulting in degradation of ion conductivity.

The halogen (Ha) in the chemical formula of Li_{7-x-2y}M_{y}PS₆₋ₓHaₓ is at least one selected from halogen elements, and includes bromine (Br). More preferably, the halogen (Ha) includes chlorine (Cl) and bromine (Br). Since sulfur (S) as a divalent anion shows stronger force of drawing lithium ion as compared to a monovalent halogen ion, and thus can inhibit lithium-ion movement significantly. When the halogen includes bromine (Br), the share of sulfur (S) at a specific site in the argyrodite-type crystal structure is decreased and the share of halogen at the corresponding site is increased, and thus lithium-ion mobility may be activated around the bromine (Br) site. As a result, it is possible to improve lithium-ion conductivity. In addition, bromine (Br) may be bound with Li in the sulfide-based solid electrolyte to form lithium bromide (LiBr), which is a water-absorbing substance. Lithium bromide (LiBr) absorbs water that may cause degradation of lithium-ion conductivity, thereby providing the sulfide-based solid electrolyte with improved lithium-ion conductivity.

The ratio (x) of halogen (Ha) in the chemical formula of Li_{7-x-2y}M_{y}PS₆₋ₓHaₓ satisfies the condition of 1.0 < x < 2.5, preferably 1.3 ≤ x ≤ 2.0, and more preferably 1.3 ≤ x ≤ 1.8. When x satisfies the above-defined range, the argyrodite-type crystal structure is stabilized, and thus the sulfide-based solid electrolyte may have high ion conductivity.

The ion conductivity of the sulfide-based solid electrolyte may be affected by the crystallinity thereof. The crystallinity may be evaluated from the XRD pattern. In the XRD pattern, when any phase (crystalline phase or amorphous phase, such as Li₂S phase, P₂S₅ phase, LiCl phase, LiBr phase, Li₃PS₄ phase, MgS phase, CaS phase, SrS phase, ZnS phase, or the like) other than the argyrodite crystalline phase is not observed or is not substantially observed, the sulfide-based solid electrolyte may have high ion conductivity.

The lattice volume of the sulfide-based solid electrolyte may be changed by the substitution of a lithium site with a Group 12 element (M). Although it is not bound to any specific theory, the Group 12 element (M) shows the properties of a divalent cation and has strong interaction with another anion present in the sulfide-based solid electrolyte, resulting in a change, i.e. increase or decrease, in lattice volume. Such a change in lattice volume results in a crystal structure suitable for lithium-ion conduction, and thus the sulfide-based solid electrolyte may have high ion conductivity.

The sulfide-based solid electrolyte may have a lattice volume of 940Å³ to 980Å³, preferably 950Å³ to 970Å³, and more preferably 954Å³ to 966Å³. The lattice constant and lattice volume may be evaluated from the XRD pattern. When the lattice volume satisfies the above-defined range, lithium-ion conduction in the sulfide-based solid electrolyte is accelerated, and thus the sulfide-based solid electrolyte may have high ion conductivity.

Unless otherwise stated, the ion conductivity (also referred to as 'lithium-ion conductivity' hereinafter) of the sulfide-based solid electrolyte refers to the ion conductivity thereof at room temperature (25°C, 298K) under ambient pressure (1 atm). In the case of the application to a solid-state battery, it is practically preferred that the ion conductivity is 4 mS/cm or more. The sulfide-based solid electrolyte according to an embodiment of the present disclosure is 1.5 mS/cm or more, preferably 4 mS/cm or more, more preferably 8 mS/cm or more, even more preferably 10.8 mS/cm or more, and most preferably 12 mS/cm or more.

The sulfide-based solid electrolyte according to an embodiment of the present invention is obtained by the method including the steps of: mixing a lithium source, a Zn source, a phosphorus source, a sulfur source and a halogen source comprising Br to obtain a mixture; and firing the mixture under inert atmosphere, such as argon gas, nitrogen gas, or the like, at a temperature of 250-600°C.

Each of the lithium source, the Zn source, the phosphorus source, the sulfur source and the halogen source may be a compound, such as sulfide, oxide, nitride, or the like. Lithium sulfide (Li₂S) may be used as a lithium source, diphosphorus pentasulfide (P₂S₅) may be used as a phosphorus source, and a lithium halide (LiHa), such as lithium chloride (LiCl), lithium bromide (LiBr), or the like, may be used as a halogen source. For example, the Zn source may be a sulfide. **In** a variant, sulfur may be supplied from a source of another element. **In** other words, at least one of the lithium source, the Zn source, the phosphorous source and the halogen source may also function as a sulfur source.

**In** the case of a sulfide-based solid electrolyte having an argyrodite-type crystal structure, the firing temperature is preferably 400-550°C, more preferably 420-530 °C, and even more preferably 450-500°C. When the firing temperature satisfies the above-defined range, formation of the argyrodite-type crystal structure may be accelerated, and thus the sulfide-based solid electrolyte may have high crystallinity. Therefore, it is possible to obtain a sulfide-based solid electrolyte having high ion conductivity.

### [Solid-state battery]

The electrolyte for a solid-state battery according to the present invention may be used for a solid-state battery including a positive electrode, a negative electrode and a solid electrolyte membrane. The solid electrolyte for a solid-state battery may be used together with the active material in the electrode active material of each of the positive electrode and the negative electrode. The solid electrolyte for a solid-state battery may be used as an ingredient of the solid electrolyte membrane. The electrolyte for a solid-state battery may have an average particle diameter controlled depending on the particular use. It is possible to improve the ion conductivity by controlling the average particle diameter of the electrolyte for a solid-state battery.

### <Solid Electrolyte Membrane>

According to the present disclosure, the solid electrolyte membrane may have a thickness of about 50 µm or less, preferably about 15-50 µm. Within the above-defined range, the solid electrolyte membrane may have a suitable thickness considering the ion conductivity, physical strength, energy density of an applicable battery, or the like. For example, in terms of the ion conductivity or energy density, the thickness may be 10 µm or more, 20 µm or more, or 30 µm or more. Meanwhile, in terms of the physical strength, the thickness may be 50 µm or less, 45 µm or less, or 40 µm or less. In addition, while the solid electrolyte membrane has the above-defined range of thickness, it may have a tensile strength of about 9.81-196.1 MPa (100-2,000 kgf/cm²). Further, the solid electrolyte membrane may have a porosity of 15 vol% or less, or about 10 vol% or less. Thus, even though the solid electrolyte membrane according to the present disclosure is a thin film, it may have high mechanical strength.

### <Positive Electrode and Negative Electrode>

According to the present disclosure, each of the positive electrode and the negative electrode includes a current collector, and an electrode active material layer formed on at least one surface of the current collector, wherein the electrode active material layer includes a plurality of electrode active material particles and a solid electrolyte. If necessary, the electrode may further include at least one of a conductive material and a binder resin. Additionally, the electrode may further include various additives in order to supplement or improve the physical/chemical properties of the electrode.

According to the present disclosure, the negative electrode active material may be any material, as long as it can be used as a negative electrode active material for a lithium-ion secondary battery. Particular examples of the negative electrode active material include at least one selected from: carbon, such as non-graphitizable carbon or graphite-based carbon; metal composite oxides, such as LiₓFe₂O₃ (0 ≤ x ≤ 1), LiₓWO₂ (0 ≤ x ≤ 1), SnₓMe₁₋ₓMe'_{y}O_{z} (Me: Mn, Fe, Pb, Ge; Me': Al, B, P, Si, elements of Group 1, 2 or 3 in the Periodic Table, halogen; 0 < x ≤ 1; 1 ≤ y ≤ 3; 1 ≤ z ≤ 8); lithium metal; lithium alloy; silicon metal; silicon-based alloy; indium metal; indium alloy; tin-based alloy; metal oxides, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers, such as polyacetylene; Li-Co-Ni type materials; and titanium oxide. According to an embodiment of the present disclosure, the negative electrode active material may include a carbonaceous material and/or Si.

In the case of the positive electrode, the electrode active material may be any material with no particular limitation, as long as it can be used as a positive electrode active material for a lithium-ion secondary battery. For example, the positive electrode active material may include: layered compounds, such as lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); lithium manganese composite oxides having a spinel structure and represented by the formula of LiNiₓMn₂₋ₓO₄; NCM-based composite oxides represented by the chemical formula of Li(NiₐCo_{b}Mn_{c})O₂ (wherein each of a, b and c represents the atomic fraction of an independent element, 0 < a < 1, 0 < b < 1, 0 < c < 1, and a + b + c = 1); LiMn₂O₄ in which Li is partially substituted with an alkaline earth metal ion; disulfide compounds; Fe₂(MoO₄)₃; or the like. However, the scope of the present disclosure is not limited thereto.

According to the present disclosure, the conductive material is added generally in an amount of 1-30 wt% based on the total weight of the mixture including the electrode active material. The conductive material is not particularly limited, as long as it causes no chemical change in the corresponding battery and has conductivity. For example, the conductive material may include any one selected from: graphite, such as natural graphite or artificial graphite; carbon black, such as acetylene black, Ketjen black, channel black, furnace black, lamp black or thermal black; conductive fibers, such as carbon fibers or metallic fibers; carbon fluoride; metal powder, such as aluminum or nickel powder; conductive whisker, such as zinc oxide or potassium titanate; conductive metal oxide, such as titanium oxide; and conductive materials, such as polyphenylene derivatives, or a mixture of two or more of them.

The binder resin is not particularly limited, as long as it is an ingredient which assists binding of the active material with the conductive material, and binding to the current collector. Particular examples of the binder resin include polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer terpolymer (EPDM), sulfonated EPDM, styrene butadiene rubber, fluororubber, various copolymers thereof, or the like. In general, the binder resin may be used in an amount of 1-30 wt%, or 1-10 wt%, based on 100 wt% of electrode active material layer.

According to the present disclosure, the electrode active material layer may further include at least one additive, such as an oxidation stabilizing additive, a reduction stabilizing additive, a flame retardant, a heat stabilizer, an anti-fogging agent, or the like.

In still another aspect of the present invention there is provided a secondary battery having the above-described structure. There are also provided a battery module including the battery as a unit cell, a battery pack including the battery module, and a device including the battery pack as a power source. Herein, particular examples of the device may include, but are not limited to: power tools driven by an electric motor; electric cars, including electric vehicles (EVs), hybrid electric vehicles (HEVs), plug-in hybrid electric vehicles (PHEVs), or the like; electric two-wheelers, including electric bikes (E-bikes) and electric scooters (E-scooters); electric golf carts; electric power storage systems; or the like.

### MODE FOR DISCLOSURE

Examples will be described more fully hereinafter so that the present disclosure can be understood with ease. However, the following examples are for illustrative purposes only without limiting the present invention as defined in the appended claims.

### Example 1

First, as ingredients of the solid electrolyte, lithium sulfide (Li₂S, available from Mitsuwa Chemical), diphosphorus pentasulfide (P₂S₅, available from Aldrich), zinc sulfide (ZnS, available from Kojundo Chemical Laboratory), lithium chloride (LiCl, available from Aldrich) and lithium bromide (LiBr, available from Aldrich) were used. The ingredients were weighed and mixed with a mortar in a glove box under argon gas atmosphere in such a manner that the finally obtained solid electrolyte might have a composition of Li_{5.4-2y}M_{y}PS_{4.4}Cl_{1.0}Br_{0.6} (doping amount of a Group 12 element (M), y = 0.0125). In this manner, a mixed powder was obtained. The resultant mixed powder was introduced to a ZrO₂ pot together with ZrO₂ balls to provide a sealed pot. The sealed pot is installed in a planetary ball mill device, a ball milling was carried out at 380 rpm for 20 hours, and then the pot was opened in the glove box to recover the powder. The resultant powder was placed in a carbon crucible, and then was fired at a firing temperature of 460°C for 8 hours, while allowing argon gas to flow. The fired powder was pulverized with a mortar for 10 minutes to obtain a solid electrolyte.

### Example 2

A solid electrolyte was obtained in the same manner as Example 1, except that the Group 12 element (M) was changed and the doping amount (y) of the Group 12 element (M) was set to 0.025, as shown in Table 1.

### Example 3

A solid electrolyte was obtained in the same manner as Example 1, except that the Group 12 element (M) was changed and the doping amount (y) of the Group 12 element (M) was set to 0.05, as shown in Table 1.

### Reference Example 4

A solid electrolyte was obtained in the same manner as Example 1, except that the Group 12 element (M) was changed and the doping amount (y) of the Group 12 element (M) was set to 0.075, as shown in Table 1.

### Reference Example 5

A solid electrolyte was obtained in the same manner as Example 1, except that the Group 12 element (M) was changed and the doping amount (y) of the Group 12 element (M) was set to 0.1, as shown in Table 1.

### Reference Example 6

A solid electrolyte was obtained in the same manner as Example 1, except that the Group 12 element (M) was changed and the doping amount (y) of the Group 12 element (M) was set to 0.2, as shown in Table 1.

### Comparative Example 1

A solid electrolyte was obtained in the same manner as Example 1, except that the Group 12 element (M) was changed and the doping amount (y) of the Group 12 element (M) was set to 0.45, as shown in Table 1.

### Comparative Example 2

A solid electrolyte was obtained in the same manner as Example 1, except that the Group 12 element (M) was not doped (i.e. the doping amount (y) of the Group 12 element (M) was 0), as shown in Table 1.

**[Table 1]**

| Sample | Firing temperature, time | Designed composition Li_{5.4-2y}M_{y}PS_{4.4}Cl_{1,0}Br_{0.6} | | Crystalline phase | | Lattice constant a = b = c (Å) | Lattice volume (Å³) | Half width (°) | Ion conductivity (σ 298K) (mS/cm) |
|---|---|---|---|---|---|---|---|---|---|
| | (°C), (h) | M | y | Argyro dite | Impurity | | | | |
| Ex. 1 | 460, 8h | Zn | 0.0125 | O | Δ | 9.8443 | 954.0 | 0.08 | 12.80 |
| Ex. 2 | 460, 8h | Zn | 0.025 | O | - | 9.8755 | 963.1 | 0.06 | 12.98 |
| Ex. 3 | 460, 8h | Zn | 0.05 | O | Δ | 9.8578 | 957.9 | 0.08 | 12.40 |
| Reference Ex. 4 | 460, 8h | Zn | 0.075 | O | Δ | 9.8576 | 957.9 | 0.08 | 9.63 |
| Reference Ex. 5 | 460, 8h | Zn | 0.1 | O | Δ | 9.8379 | 952.2 | 0.07 | 8.78 |
| Reference Ex. 6 | 460, 8h | Zn | 0.2 | O | Δ | 9.8560 | 957.4 | 0.07 | 1.69 |
| Comp. Ex. 1 | 460, 8h | Zn | 0.45 | Δ | X | Not available | Not available | Not available | 0.0000270 |
| Comp. Ex. 2 | 460, 8h | - | 0 | O | - | 9.9471 | 984.2 | 0.08 | 10.70 |

| | | | | | | | | | |
|---|---|---|---|---|---|---|---|---|---|
| O: present in a large amount △: present in a trace amount X: Impurities present in a large amount - : nearly absent | | | | | | | | | |

### Comparative Example 3

First, as ingredients of the solid electrolyte, lithium sulfide (Li₂S, available from Mitsuwa Chemical), diphosphorus pentasulfide (P₂S₅, available from Aldrich), tin sulfide (SnS₂, available from Kojundo Chemical Laboratory) and lithium iodide (LiI, available from Aldrich) were used. The ingredients were weighed and mixed with a mortar in a glove box under argon gas atmosphere in such a manner that the finally obtained solid electrolyte might have a composition of Li_{6.95}P_{0.05}Sn_{0.95}S₅I. In this manner, a mixed powder was obtained. The resultant mixed powder was introduced to a ZrO₂ pot together with ZrO₂ balls to provide a sealed pot. The sealed pot is installed in a planetary ball mill device, a ball milling was carried out at 380 rpm for 20 hours, and then the pot was opened in the glove box to recover the powder. The resultant powder was placed in a carbon crucible, and then was fired at a firing temperature of 460°C for 8 hours, while allowing argon gas to flow. The fired powder was pulverized with a mortar for 10 minutes to obtain a solid electrolyte.

The solid electrolyte, Li_{6.95}P_{0.05}Sn_{0.95}S₅I, obtained from Comparative Example 3 is a sulfide-based solid electrolyte containing Sn as an element other than a Group 12 element. The ion conductivity of the sulfide-based solid electrolyte of Comparative Example 3 was determined to be 0.81 mS/cm.

### [Evaluation]

Each solid electrolyte was evaluated as follows.

### (XRD Analysis)

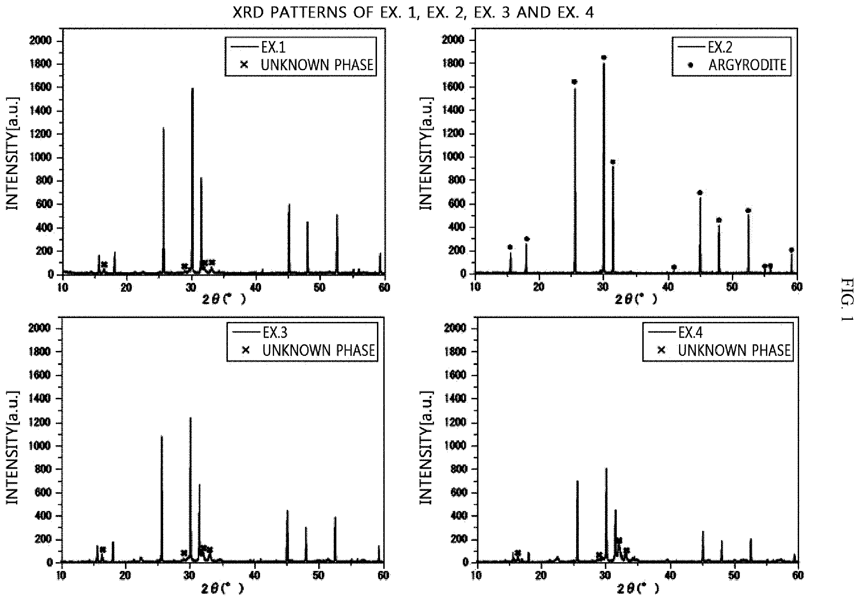

Each solid electrolyte was taken in a predetermined amount and introduced to a sealed holder in a glove box under argon gas, and X-ray diffractometry (XRD) was carried out. Then, the lattice constant, lattice volume and half width were calculated from the resultant XRD (X-ray diffraction) pattern. The half width was calculated from the crystal peak of (311) surface of the argyrodite crystal structure observed at around 2θ = 30° in FIG. 1.

### (Determination of Ion Conductivity)

Each solid electrolyte was weighed in a predetermined amount and disposed in a MACOR^{®} pipe, and then a pellet-molding jig (upper press pin and lower press pin) was assembled with the MACOR pipe. Then, press molding was carried out under 5 MPa by using a monoaxial press. After that, a predetermined amount of gold powder was applied to both surfaces of the pellets, and press molding was carried out under 7.5 MPa by using a monoaxial press to obtain a MACOR pipe cell. The resultant MACOR pipe cell was mounted to a jig cell for electrochemical analysis, and pressurization was carried out to 5.0 N·m by using a torque wrench to obtain an ion conductivity test cell. The test cell was connected to an impedance analyzer, and the resistance value of the solid electrolyte pellets was measured at room temperature (298K) under ambient pressure (1 atm) to calculate the ion conductivity (mS/cm) of the solid electrolyte.

### (Determination of Initial Charge/Discharge Capacity)

First, an NCM-based positive electrode active material having a Ni content of 80 mol% and a solid electrolyte were weighed at a weight ratio of 70:30. Next, 1.5 wt% of carbon black as a conductive material was added thereto, followed by mixing, to obtain a positive electrode mixture. The solid electrolyte obtained as described above was weighed in an amount of 80 mg, installed in a molding jig and subjected to press molding under 6 MPa for 1 minute to obtain solid electrolyte pellets. Then, 10 mg of the positive electrode mixture obtained as mentioned above was disposed on one surface of the solid electrolyte pellets, and the press pin made of SUS in the molding jig was pressed to perform planarization, thereby forming a positive electrode layer. After that, an Al plate was disposed on the resultant positive electrode layer, and press molding was carried out under 30 MPa for 1 minute. Then, Li-Cu foil was disposed on the other surface of the solid pellets, and press molding was carried out under 3 MPa for 30 seconds. The resultant product was combined with the press pin made of SUS to provide a MACOR pipe cell. The resultant MACOR pipe cell was installed in a battery cell, and a torque of 2 N·m was applied thereto to obtain a solid-state battery cell.

The resultant solid-state battery was subjected to a charge/discharge test in a voltage range from 4.25 V to 3.0 V under a charge condition of constant current (CC) (0.05 C)-constant voltage (CV) (0.01 C cut-off) and a discharge condition of CC (0.05 C). Then, the initial charge capacity and initial discharge capacity were obtained from the resultant charge/discharge curve.

### [Evaluation Results]

### (Crystalline Phase)

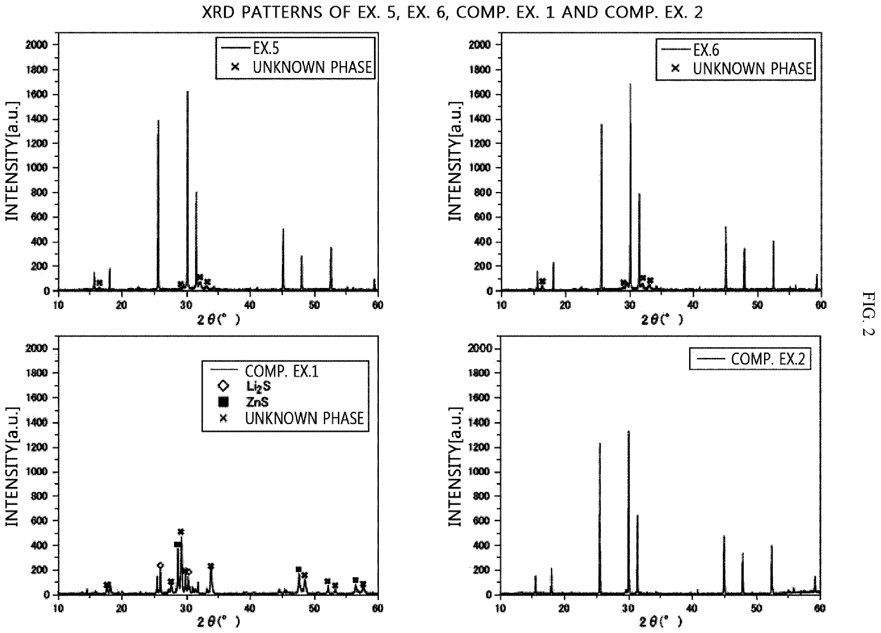

The evaluation results of crystalline phase (crystal structure) identified from the XRD pattern obtained by X-ray diffractometry (XRD) are shown in Table 1. In addition, typical XRD patterns are shown in FIGS. 1 and 2.

As shown in Table 1, in Example 2 and Comparative Example 2, substantially no impurity phase (also referred to as 'unknown phase') is observed, and most peaks are derived from argyrodite phase. In addition, in Examples 1 and (Reference) Examples 3-6, a peak of argyrodite phase and a trace amount of impurity phase are present. Meanwhile, in Comparative Example 1, substantially no peak of argyrodite phase is observed, and a large amount of impurity phases other than argyrodite phase is present. For example, the impurity phases are those derived from the starting materials, such as Li₂S and ZnS.

FIGS. 1 and 2 show the XRD patterns of (Reference) Examples 1-6 and Comparative Examples 1 and 2. In Example 2 wherein the doping amount (y) is 0.025 and Comparative Example 2 wherein the doping amount (y) is 0, substantially only the peak of argyrodite phase is present. In addition, in Examples 1 and (Reference) Examples 3-6 wherein the doping amount (y) is 0.0125, 0.05, 0.075, 0.1 and 0.2, respectively, substantially only the peak of argyrodite phase is present, but the peaks derived from impurity phases, such as Li₂S and ZnS, are also detected. Meanwhile, in Comparative Example 1 wherein the doping amount (y) is 0.45, substantially no peak of argyrodite phase is detected, and peaks of a large amount of impurity phases are detected.

In (Reference) Examples 1-6 and Comparative Example 2, a sulfide-based solid electrolyte having an argyrodite-type crystal structure with little or no impurity phase is obtained. It is thought that a sulfide-based solid electrolyte having high crystallinity accelerates hopping conduction of lithium ions, and thus contributes to improvement of ion conductivity.

### (Lattice Volume)

With reference to the lattice constant derived from the XRD pattern, Examples show a range of 9.8379Å to 9.8755Å, while the lattice volume is in a range of 952.2Å³ to 963.1Å³. Meanwhile, in Comparative Example 1 wherein the doping amount (y) of Zn is 0.45, it is not possible to determine the lattice constant due to a large amount of impurities. In addition, in Comparative Example 2 wherein the lithium site of sulfide-based solid electrolyte is not substituted with a Group 12 element (M), the lattice constant is 9.9471Å, and the lattice volume is 984.2Å³. It is shown that substitution with the lithium site of an argyrodite-type crystal structure with a Group 12 element (M) causes a decrease in lattice volume of about 2.1-3.3%. Although it is not bound to any specific theory, it is thought that when one of both lithium sites is substituted with a Group 12 element (M) and the other becomes a lithium vacancy, the crystal volume of the sulfide-based solid electrolyte is changed. It is also thought that the lithium vacancy becomes a path for hopping conduction of lithium ions, and thus contributes to improvement of ion conductivity. In addition, it is thought that the Group 12 element (M) substituting for the lithium site may be divalent and may undergo a change in force of drawing the anions around the Group 12 element (M) site, as compared to monovalent lithium ions. Therefore, it is though that the sulfide-based solid electrolyte undergoes a change in crystal volume in this manner, and thus is converted into a structure suitable for hopping conduction of lithium ions.

With reference to the half width of the crystal peak of (311) surface of argyrodite crystal structure, Examples show a range of 0.06° to 0.08°. Meanwhile, Comparative Example 2 shows a half width of 0.08°. Example 2 wherein the doping amount satisfies the condition of y = 0.025 shows a small half width. It is thought that such a small half width contributes to improvement of ion conductivity according to a large crystallite size.

### (Ion Conductivity)

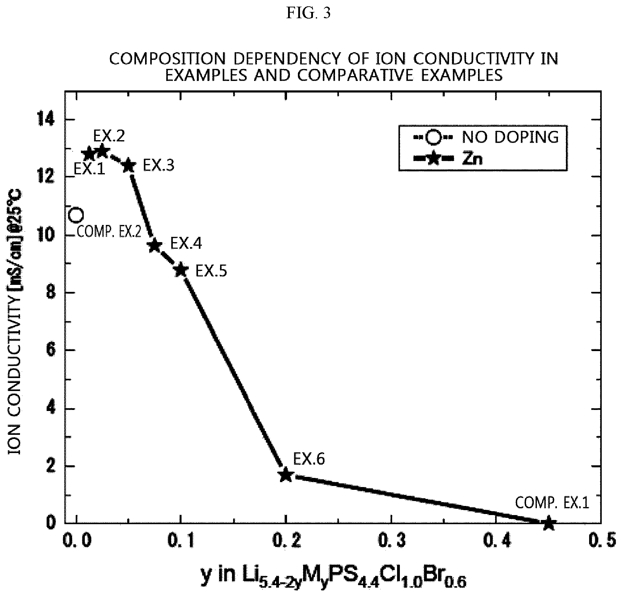

The results of ion conductivity are shown in Table 1. In addition, FIG. 3 is a graph plotted by taking the doping amount (y) of a Group 12 element (M) in the composition Li_{5.4-2y}M_{y}PS_{4.4}Cl_{1.0}Br_{0.6} of a sulfide-based solid electrolyte as the transverse axis and taking the ion conductivity determined at 25°C under ambient pressure as the vertical axis. Each point in FIG. 3 corresponds to each of (Reference) Examples 1-6 and Comparative Example 1 doped with Zn as a Group 12 element (M), and Comparative Example 2 not doped with a Group 12 element (M) (corresponding to 'no doping' in the drawing).

As can be seen from FIG. 3 and Table 1, (Reference) Examples 1-6 show an ion conductivity of 1.69-12.98 mS/cm. In Example 2 wherein the doping amount (y) of Zn as a Group 12 element (M) is 0.025, the ion conductivity shows the highest value, 12.98 mS/cm. Meanwhile, Comparative Example 1 wherein the doping amount (y) of Zn as a Group 12 element (M) is 0.45, the ion conductivity is 0.0000270 mS/cm. As such, the ion conductivity of each Example is increased as compared to the ion conductivity of Comparative Example 1. It is thought that the doping amount (y) of a Group 12 element (M) is excessively large in Comparative Example 1, and thus the crystallinity of argyrodite-type crystal structure is lowered to cause a decrease in ion conductivity. In addition, Comparative Example 2 wherein no Group 12 element (M) is doped shows an ion conductivity of 10.70 mS/cm. In addition, in the case of Comparative Example 3 not doped with a Group 12 element (M) but doped with Sn, the ion conductivity is 0.81 mS/cm.

In addition, as can be seen from FIG. 3 and Table 1, when the doping amount (y) of Zn as a Group 12 element (M) is 0.025 (Example 2), the ion conductivity is increased as compared to the adjacent cases wherein y = 0.0125 (Example 1) and y = 0.05 (Example 3). Referring to the XRD pattern of FIG. 1, a trace amount of impurity phase (unknown phase) is observed in Examples 1 and 3, while substantially no impurity phase is observed in Example 2. Accordingly, it is thought that such an increase in ion conductivity results from a decrease in impurities present in the sulfide-based solid electrolyte and an increase in crystallinity of the argyrodite-type crystal structure. Therefore, it is preferred that the sulfide-based solid electrolyte does not include any impurity phase other than argyrodite phase (i.e. has a high crystallinity of the argyrodite-type crystal structure) in order to increase the ion conductivity.

Examples 1-3 wherein the doping amount (y) of Zn as a Group 12 element is y < 0.075 shows a higher ion conductivity as compared to Comparative Example 2. It is thought from the results of XRD that Comparative Example 2 has a higher crystallinity of argyrodite-type crystal structure as compared to Examples 1 and 3, but actually, Examples 1 and 3 having a relatively lower crystallinity has a higher ion conductivity as compared to Comparative Example 2 having a relatively higher crystallinity. It can be seen from the above result that not only the crystallinity of argyrodite-type crystal structure but also the presence of a Group 12 element (M) affects the ion conductivity.

As shown in FIG. 3 and Table 1, when the doping amount (y) of Zn as a Group 12 element is less than 0.45, the ion conductivity is larger than 1.5 mS/cm. When the doping amount (y) of Zn as a Group 12 element is less than 0.20, the ion conductivity is larger than 8 mS/cm. When the doping amount (y) of Zn as a Group 12 element is less than 0.075, the ion conductivity is larger than 12 mS/cm. When the doping amount (y) of Zn as a Group 12 element is less than 0.075, the ion conductivity is higher than 10.70 mS/cm which is the ion conductivity of Comparative Example 2 not doped with Zn as a Group 12 element. Comparative Example 3 not doped with a Group 12 element (M) but doped with Sn shows an ion conductivity of 0.81 mS/cm, which is significantly lower than the ion conductivity values of (Reference) Examples.

### (Battery Characteristics)

When the sulfide-based solid electrolyte according to Example 2 is used for a solid-state battery, the sulfide-based solid electrolyte shows high stability to lithium metal as a negative electrode material, and the solid-state battery shows excellent charge/discharge characteristics and capacity characteristics. The relative ratio of the capacity of a solid-state battery using the solid electrolyte of Example 2 based on the capacity of a solid-state battery using the sulfide-based solid electrolyte of Comparative Example 2 not doped with Zn as a Group 12 element is 106%, as expressed by a relative ratio of the initial discharge capacity. In other words, it is possible to improve the initial discharge capacity of a solid-state battery by using the solid electrolyte of Example 2 having high ion conductivity for the solid-state battery.

## Claims

1. A sulfide-based solid electrolyte, which contains a Group 12 element, has an argyrodite-type crystal structure, and is represented by the chemical formula of Li_{7-x-2y}M_{y}PS₆₋ₓHaₓ, wherein M is Zn, Ha is at least one element selected from halogen elements and Ha comprises Br, and x and y satisfy the conditions of 1.0 < x < 2.5 and 0 < y < 0.075.

2. The sulfide-based solid electrolyte according to claim 1, wherein x satisfies the condition of 1.3 ≤ x ≤ 2.0.

3. The sulfide-based solid electrolyte according to claim 1, wherein x satisfies the condition of 1.3 ≤ x ≤ 1.8.

4. A method for preparing the sulfide-based solid electrolyte as defined in claim 1, comprising the steps of:
mixing a lithium source, a Zn source, a phosphorus source, a sulfur source and a halogen source comprising Br to obtain a mixture; and
firing the mixture at a temperature of 250-600°C.

5. A solid-state battery comprising a positive electrode, a negative electrode and a solid electrolyte membrane, wherein the solid electrolyte membrane comprises the sulfide-based solid electrolyte as defined in claim 1.

## Patentansprüche

1. Fester Elektrolyt auf Basis von Sulfid, der ein Element der Gruppe 12 enthält, eine Kristallstruktur vom Argyrodit-Typ aufweist und durch die chemische Formel Li_{7-x-2y}M_{y}PS₆₋ₓHaₓ dargestellt ist, wobei M Zn ist, Ha mindestens ein Element ist, das aus Halogenelementen ausgewählt ist, und Ha Br umfasst, und x und y die Bedingungen 1,0 < x < 2,5 und o < y < 0,075 erfüllen.

2. Fester Elektrolyt auf Basis von Sulfid nach Anspruch 1, bei dem x die Bedingung 1,3 ≤ x ≤ 2,0 erfüllt.

3. Fester Elektrolyt auf Basis von Sulfid nach Anspruch 1, bei dem x die Bedingung 1,3 ≤ x ≤ 1,8 erfüllt.

4. Verfahren zur Herstellung des festen Elektrolyten auf Basis von Sulfid nach Anspruch 1, das die folgenden Schritte umfasst:
Mischen einer Lithiumquelle, einer Zn-Quelle, einer Phosphorquelle, einer Schwefelquelle und einer Halogenquelle, die Br umfasst, um eine Mischung zu erhalten; und
Brennen der Mischung bei einer Temperatur von 250-600 °C.

5. Festkörperbatterie, die eine positive Elektrode, eine negative Elektrode und eine Festelektrolytmembran umfasst, wobei die Festelektrolytmembran den festen Elektrolyten auf Basis von Sulfid nach Anspruch 1 umfasst.

## Revendications

1. Électrolyte solide à base de sulfure, qui contient un élément du Groupe 12, a une structure cristalline de type argyrodite, et est représenté par la formule chimique de Li_{7-x-2y}M_{y}PS₆₋ₓHaₓ, dans lequel M est Zn, Ha est un ou plusieurs éléments sélectionnés parmi des éléments d'halogène et Ha comprend Br, et x et y satisfont aux conditions de 1,0 < x < 2,5 et 0 < y < 0,075.

2. Électrolyte solide à base de sulfure selon la revendication 1, dans lequel x satisfait à la condition de 1,3 ≤ x ≤ 2,0.

3. Électrolyte solide à base de sulfure selon la revendication 1, dans lequel x satisfait à la condition de 1,3 ≤ x ≤ 1,8.

4. Procédé de préparation de l'électrolyte solide à base de sulfure définie selon la revendication 1, comprenant les étapes consistant à :
mélanger une source de lithium, une source de Zn, une source de phosphore, une source de soufre et une source d'halogène comprenant Br pour obtenir un mélange ; et
cuire le mélange à une température de 250-600°C.

5. Batterie tout-solide comprenant une électrode positive, une électrode négative et une membrane d'électrolyte solide, dans laquelle la membrane d'électrolyte solide comprend l'électrolyte solide à base de sulfure défini selon la revendication 1,
